(19) Europäisches Patentamt
European Patent Office
Office européen des brevets

(11) **EP 1 438 496 B1**

(12) **EUROPÄISCHE PATENTSCHRIFT**

(45) Veröffentlichungstag und Bekanntmachung des Hinweises auf die Patenterteilung:
**31.10.2007 Patentblatt 2007/44**

(21) Anmeldenummer: **02781221.3**

(22) Anmeldetag: **05.10.2002**

(51) Int Cl.:
*F02F 7/00* (2006.01)     *F16C 9/02* (2006.01)

(86) Internationale Anmeldenummer:
**PCT/EP2002/011197**

(87) Internationale Veröffentlichungsnummer:
**WO 2003/036070 (01.05.2003 Gazette 2003/18)**

(54) **LAGERDECKEL FÜR EIN KURBELWELLENLAGER EINER BRENNKRAFTMASCHINE**

BEARING COVER FOR A CRANKSHAFT BEARING OF AN INTERNAL COMBUSTION ENGINE

CHAPEAU DE PALIER POUR PALIER DE VILEBREQUIN DE MOTEUR A COMBUSTION INTERNE

(84) Benannte Vertragsstaaten:
**FR GB IT**

(30) Priorität: **25.10.2001 DE 10152156**

(43) Veröffentlichungstag der Anmeldung:
**21.07.2004 Patentblatt 2004/30**

(73) Patentinhaber: **AUDI AG**
**85045 Ingolstadt (DE)**

(72) Erfinder:
• **BINDER, Thomas**
**85092 Kösching (DE)**
• **MÄRKLE, Tobias**
**85095 Denkendorf (DE)**

(74) Vertreter: **Mader, Wilfried**
**AUDI AG,**
**Patentabteilung**
**85045 Ingolstadt (DE)**

(56) Entgegenhaltungen:
**BE-A- 345 124     DE-A- 2 153 258**
**DE-C- 3 426 208     FR-A- 1 260 236**
**GB-A- 843 527**

EP 1 438 496 B1

**Beschreibung**

Die Erfindung betrifft einen Lagerdeckel für ein Kurbelwellenlager einer Brennkraftmaschine mit einer Lagerschale, zwei seitlich der Lagerschale angeordneten Schraubenpfeifen zur Befestigung an einem Lagerstuhl sowie einer sich zwischen den beiden Schraubenpfeifen erstreckenden Versteifungen der Lagerschale.

Ein derartiger Lagerdeckel ist aus der DE 34 26 208 C1 bekannt. Dieser Lagerdeckel ist zur Gewichtsreduzierung aus einer Leichtmetall-Legierung hergestellt, in die ein Kern aus einem eisenmetallischen Werkstoff eingearbeitet ist, der sich im Bereich des Kurbelwellenzapfenlagers zu den Schraubenpfeifen erstreckt und auch letztere umfaßt. Die Versteifung ist als Querrippe zwischen den Schraubenpfeifen ausgebildet, die mit dem Kern eine Doppel-T-Form bildet und an den Schraubenpfeifen zwei runde Durchbrechungen aufweist. Dieser Lagerdeckel ist wegen des Kerns aufwendig herzustellen und seine Formgebung ist nicht optimiert. Insbesondere ist die Anbindung der Querrippe an die Schraubenpfeifen unter Einfügung der runden Durchbrechungen bezüglich Kraftfluß und Materialaufwand und damit dem Gewicht nicht optimiert.

Der Erfindung liegt daher die Aufgabe zugrunde, einen Lagerdeckel der eingangs genannten Art bezüglich seiner Formgebung derart zu optimieren, dass bei geringem Gewicht eine hohe Stabilität erzielbar ist, insbesondere für eine Herstellung aus homogenem Material.

Die Aufgabe wird erfindungsgemäß dadurch gelöst, dass die Versteifung aus zwei, schräg von dem Bereich der oberen Enden der Schraubenpfeifen sich zur Lagerschale erstreckenden, auf ihrer Länge einen im wesentlichen konstanten Querschnitt aufweisenden Streben sowie einer Rippe besteht, die sich an der Oberseite der Lagerschale von einer Strebe zur anderen erstreckt.

Insbesondere durch die seitliche Abstützung mittels Streben mit im wesentlichen konstantem Querschnitt werden die Querkräfte aus dem Kurbeltrieb unter geringstem Materialeinsatz optimal aufgenommen. Zwischen den Streben werden die Kräfte durch Lagerschale und Rippe aufgenommen und zwischen Streben, Lagerschale und Schraubenpfeifen ist eine Verstärkung aufgrund der Kraftaufnahme durch die Streben nicht erforderlich. In diesem Bereich kann das Material völlig eingespart werden, wodurch im wesentlichen dreieckförmige Durchbrechungen entstehen. Bei dieser Formgebung ist der Materialeinsatz auf die Bereiche beschränkt, in denen die im Betrieb auftretenden Kräfte wirken. Es wird also eine optimale Gewichtsreduktion ohne Verlust an Steifigkeit erzielt. Dadurch werden auch Gleitbewegungen zwischen Lagerstuhl und Lagerdeckel infolge der wechselnden Belastungen durch Kräfte und Temperaturen weitgehendst vermieden. Die Lagerdeformationen werden trotz Gewichtsverringerung nicht verschlechtert und der Ölkreislauf im Verbrennungsmotor muß gegenüber den Lagerdeckeln des Standes der Technik nicht neu ausgelegt werden. Auch Lagergassendeformationen, also Deformationen aller Lagerschalen der anzutreibenden Welle werden durch die Steifigkeit des Profils gering gehalten. Durch die Erfindung wird ein sehr leichter und leistungsfähiger Lagerdeckel, insbesondere für die Leistungsklasse von über 100 PS pro Liter Hubraum verfügbar, der für eine einfache und preiswerte Herstellung aus homogenem Material geeignet ist.

Weiterbildungen der Erfindung beinhalten insbesondere Optimierungen durch Formgebung und Bemessung.

Die Querkräfte aus dem Kurbeltrieb werden am optimalsten aufgefangen, wenn sich die Streben in Richtung der zu erwartenden Kurbelwellenresultierenden erstrecken, wobei, wie bereits erwähnt, sich zwischen Schraubenpfeifen, Streben sowie der Lagerschale zur Gewichtseinsparung dreieckförmige Durchbrechungen ergeben. In diesem Bereich ist also keine Rippe auf der Lagerschale. Vorzugsweise erfolgt die Bemessung des Strebenquerschnitts entsprechend dem Werkstoff und der zur erwartenden Kurbelwellenresultierenden. Eine zweckmäßige Ausbildung sieht dabei vor, dass die Strebenbreite ungefähr der Lagerschalenbreite entspricht. Die Breite der Streben dient einer optimalen Abstützung der Lagerschale an den Schraubenpfeifen und damit einer hohen Steifigkeit.

Eine optimale Bemessung der Querschnitte der Streben und der Rippe wird erzielt, wenn das Verhältnis des Flächenträgheitsmoments der Streben $I_S$ zum Flächenträgheitsmoment der Rippe $I_R$ dem Verhältnis der vorgesehenen Schraubenkraft $F_S$ der Schrauben zur Befestigung des Lagerdeckels zu der zu erwartenden Kurbeltriebslagerkraft $F_L$ entspricht.

Für die Bemessung ist vorgesehen, dass sich die Bemessung der Höhe und der Breite der Streben und die Bemessung der Höhe und der Breite der Rippe aus

dem Verhältnis $K * \dfrac{I_S}{I_R} = \dfrac{F_S}{F_L}$ ergibt, wobei sich die Konstante K nach dem Werkstoff und der zu erwartenden Kurbelwellenresultierenden bestimmt und wobei sich das Flächenträgheitsmoment der Streben aus

$$I_S = \frac{B_S * H_S{}^3}{12}$$ und das Flächenträgheitsmoment der Rippe aus $I_R = \dfrac{B_R * H_R{}^3}{12}$ ergibt mit

$B_S$ = Breite der Strebe
$H_S$ = Höhe der Strebe
$B_R$ = Breite der Rippe
$H_R$ = Höhe der Rippe

Eine zweckmäßige Ausgestaltung des Stegquerschnitts sieht vor, dass die Rippe weniger als halb so breit ist wie die Lagerschale und in deren Mitte verläuft. Eine schmale Ausgestaltung der Rippe dient einer hohen Steifigkeit bei geringem Gewicht.

Wie schon erwähnt, ist die Formgebung des erfindungsgemäßen Lagerdeckels besonders für die Herstellung aus homogenem Material geeignet, wobei der Verwendung von Gußeisen mit Kugelgraphit wegen der großen Verschleißfestigkeit und dem hohen Korrosionswiderstand der Vorzug zu geben ist.

Die Erfindung wird nachfolgend anhand eines in der Zeichnung dargestellten Ausführungsbeispiels näher erläutert. Es zeigen

Fig. 1      eine perspektivische Ansicht des Ausführungsbeispiels,

Fig. 2      eine Draufsicht,

Fig. 3      eine Seitenansicht und

Fig. 4      einen Schnitt durch den Steg.

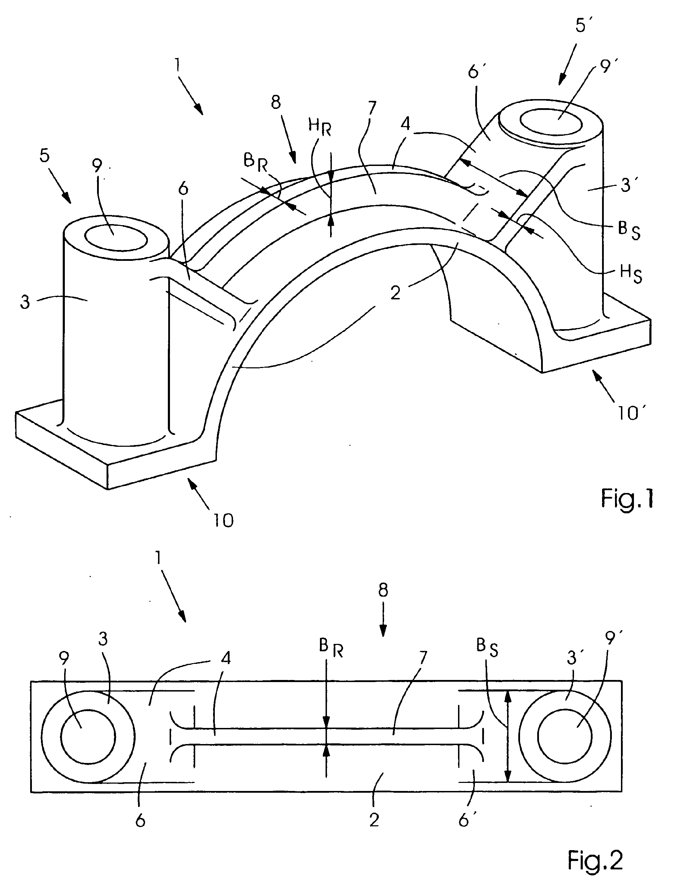

Fig. 1 zeigt eine perspektivische Ansicht eines Ausführungsbeispiels des erfindungsgemäßen Lagerdeckels 1. Dieser besteht aus einer halbkreisförmigen Lagerschale 2 mit angefügten geraden Auflagen 10, 10' für die Befestigung des Lagerdeckels 1 auf einem nicht dargestellten Lagerstuhl. Von diesen Auflagen 10, 10' erstrecken sich Schraubenpfeifen 3, 3' nach oben, welche mit Löchern 9, 9' für die Schrauben versehen sind.

Erfindungsgemäß wesentlich ist die Ausgestaltung der Versteifung 4, welche die Lagerschale 2 zwischen den beiden Schraubenpfeifen 3, 3' stabilisiert. Diese Versteifung 4 weist zwei schräg vom oberen Bereich 5, 5' der Schraubenpfeifen 3, 3' ausgehende Streben 6, 6' auf, welche mit der Lagerschale 2 verbunden sind und eine Höhe $H_S$ sowie eine Breite $B_S$ aufweisen. Zwischen diesen Streben 6, 6' erstreckt sich eine an der Oberseite der Lagerschale 2 angeordnete Rippe 7, so dass die Lagerschale 2 mit der Rippe 7 einen zwischen den Streben 6, 6' verlaufenden Steg 8 bilden. Die Rippe 7 weist eine Breite $B_R$ und eine Höhe $H_R$ auf.

Um einen optimalen Kraftfluß bei möglichst geringem Gewicht zu erzielen, sind die Streben 6 und 6' in Richtung der zu erwartenden Kurbelwellenresultierenden ausgerichtet und der Strebenquerschnitt ist entsprechend dem verwendeten Werkstoff und der zu erwartenden Kurbelwellenresultierenden nach den oben dargelegten Kriterien bemessen.

Fig. 2 zeigt eine Draufsicht auf den erfindungsgemäßen Lagerdeckel 1. Aus dieser Draufsicht ist ersichtlich, dass die Breite Bs der Streben 6, 6' ungefähr der Lagerschalenbreite entspricht. Auch dadurch wird ein wesentlich besserer Kraftfluß zwischen der Lagerschale 2 und den Schraubenpfeifen 3, 3' erzielt als bei der relativ schmalen Querrippe des eingangs erwähnten Standes der Technik. Aus dieser Darstellung ist auch die Breite $B_S$ der Streben 6 und 6' sowie die Breite $B_R$ der Rippe 7 ersichtlich.

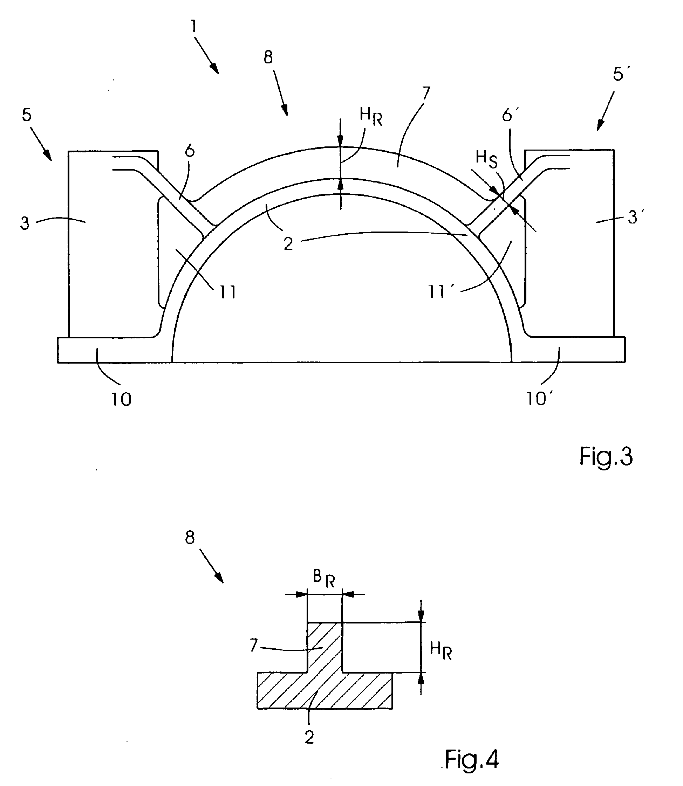

Fig. 3 zeigt eine Seitenansicht des erfindungsgemäßen Lagerdeckels 1, aus der sichtbar ist, dass sich zwischen den Streben 6, 6', den Schraubenpfeifen 3, 3' und der Lagerschale 2 dreieckförmige Durchbrechungen 11, 11' ergeben, dass also in diesem Bereich die Lagerschale 2 keine Rippe 7 zur Versteifung aufweist. Diese Ausgestaltung dient dem bereits erwähnten optimalen Kraftfluß unter maximaler Gewichtseinsparung. Aus dieser Darstellung ist auch die Höhe $H_R$ der Rippe 7 und die Höhe $H_S$ der Streben 6, 6' ersichtlich.

Fig. 4 zeigt einen Schnitt durch diesen Steg 8, wobei die Höhe $H_R$ und die Breite $B_R$ der Rippe 7 ersichtlich sind, sowie der Querschnitt des Stegs 8, der sich aus der Lagerschale 2 und der, in der Mitte dieser Lagerschale 2 angeordneten Rippe 7 ergibt. Um eine hohe Steifigkeit bei geringem Gewicht zu erzielen, sollte die Rippe 7 eher schmal und hoch ausgebildet sein.

Selbstverständlich sind gegenüber diesem Ausführungsbeispiel abweichende Ausgestaltungen im Rahmen der Merkmale des Anspruchs 1 möglich. Die Darstellung ist lediglich beispielhaft.

### Bezugszeichenliste

| 1 | Lagerdeckel |
|---|---|
| 2 | Lagerschale |
| 3, 3' | Schraubenpfeifen |
| 4 | Versteifung |
| 5, 5' | Bereich der Enden der Schraubenpfeifen |
| 6, 6' | Streben |
| 7 | Rippe |
| 8 | Steg |
| 9, 9' | Löcher der Schrauben |
| 10, 10' | Auflage auf Lagerstuhl |
| 11, 11' | dreieckförmige Durchbrechungen |

| $B_S$ | Breite der Streben |
|---|---|
| $H_S$ | Höhe der Streben |
| $B_R$ | Breite der Rippe |
| $H_R$ | Höhe der Rippe |

### Patentansprüche

1. Lagerdeckel (1) für ein Kurbelwellenlager einer Brennkraftmaschine mit einer Lagerschale (2), zwei seitlich der Lagerschale (2) angeordneten Schraubenpfeifen (3, 3') zur Befestigung an einem Lagerstuhl sowie einer sich zwischen den beiden Schraubenpfeifen (3, 3') erstreckenden Versteifungen (4) der Lagerschale (2),
dadurch gekennzeichnet,
dass die Versteifung (4) aus zwei, schräg vom Bereich der oberen Enden (5, 5') der Schraubenpfeifen (3, 3') sich zur Lagerschale (2) erstreckenden, auf ihrer Länge einen im wesentlichen konstanten Querschnitt aufweisenden Streben (6, 6') sowie einer Rippe (7) besteht, die sich an der Oberseite der Lagerschale (2) von einer Strebe (6) zur anderen (6') erstreckt.

2. Lagerdeckel nach Anspruch 1,
**dadurch gekennzeichnet,**
**dass** sich die Streben (5, 5') in Richtung der zu erwartenden Kurbelwellenresultierenden erstrecken.

3. Lagerdeckel nach Anspruch 1 oder 2,
**dadurch gekennzeichnet,**
**dass** sich zwischen den Schraubenpfeifen (3, 3'), den Streben (6, 6') sowie der Lagerschale (2) dreieckförmige Durchbrechungen (11, 11') ergeben.

4. Lagerdeckel nach Anspruch 1, 2 oder 3,
**dadurch gekennzeichnet,**
**dass** die Bemessung des Strebenquerschnitts entsprechend dem Werkstoff und der zu erwartenden Kurbelwellenresultierenden erfolgt.

5. Lagerdeckel nach Anspruch 4
**dadurch gekennzeichnet,**
**dass** die Strebenbreite ungefähr der Lagerschalenbreite (B) entspricht.

6. Lagerdeckel nach einem der Ansprüche 1 bis 5,
**dadurch gekennzeichnet,**
**dass** das Verhältnis des Flächenträgheitsmomentes der Streben ($I_S$) zum Flächenträgheitsmoment der Rippe ($I_R$) dem Verhältnis der vorgesehenen Schraubenkraft ($F_S$) zur der zu erwartenden Kurbeltriebslagerkraft ($F_L$) entspricht.

7. Lagerdeckel nach Anspruch 6,
**dadurch gekennzeichnet,**
**dass** sich die Bemessung ($B_S$, $H_S$) der Streben (6, 6') und die Bemessung ($B_R$, $H_R$) der Rippe (7) aus

dem Verhältnis $K * \dfrac{I_S}{I_R} = \dfrac{F_S}{F_L}$ ergibt, wobei sich die Konstante (K) nach dem Werkstoff und der zu erwartenden Kurbelwellenresultierenden bestimmt und wobei sich das Flächenträgheitsmoment der Streben aus $I_S = \dfrac{B_S * H_S^{\,3}}{12}$ und das Flächenträgheitsmoment der Rippe aus $I_R = \dfrac{B_R * H_R^{\,3}}{12}$ ergibt mit

$B_S$ = Breite der Strebe (6, 6')
$H_S$ = Höhe der Strebe (6, 6')

$B_R$ = Breite der Rippe (7)
und $H_R$ = Höhe der Rippe (7).

8. Lagerdeckel nach Anspruch 7,
**dadurch gekennzeichnet,**
**dass** der Stegquerschnitt derart gewählt ist, dass die Lagerschale (2) möglichst dünn
und die Rippe (7) eher hoch ausgebildet ist.

9. Lagerdeckel nach Anspruch 7 oder 8,
**dadurch gekennzeichnet,**
**dass** die Rippe (7) weniger als halb so breit ist, wie die Lagerschale (2) und in deren Mitte verläuft.

10. Lagerdeckel nach einem der Ansprüche 1 bis 9,
**dadurch gekennzeichnet,**
**dass** er aus homogenem Material hergestellt ist.

11. Lagerdeckel nach Anspruch 10,
**dadurch gekennzeichnet,**
**dass** er aus Gußeisen mit Kugelgraphit besteht.

**Claims**

1. Bearing cover (1) for a crankshaft bearing of an internal combustion engine, comprising a bearing shell (2), two screw columns (3, 3') which are located on both sides of the bearing shell (2) and provided for mounting on a bearing block, and comprising a reinforcement (4) of the bearing shell (2) extending between the two screw columns (3,3'),
**characterised in that**
the reinforcement (4) is comprised of two braces (6, 6') which extend diagonally from the area of the upper ends (5, 5') of the screw columns (3, 3') to the bearing shell (2) and which have a substantially constant cross-section over the length thereof, and of a rib (7) extending on the upper side of the bearing shell (2) from one brace (6) to the other (6').

2. Bearing cover according to claim 1,
**characterised in that** the braces (5, 5') extend in the direction of the expected resultant of the crankshaft.

3. Bearing cover according to claim 1 or 2,
**characterised in that** triangular cut-outs (11, 11') are produced between the screw columns (3, 3'), the braces (6, 6') and the bearing shell (2).

4. Bearing cover according to claim 1, 2 or 3,
**characterised in that** the dimensions of the brace cross-section are governed by the material and by the expected resultant of the crankshaft.

5. Bearing cover according to claim 4,
**characterised in that** the width of the brace is approximately the same as the width (B) of the bearing shell.

**6.** Bearing cover according to any one of claims 1 to 5, **characterised in that** the ratio of the geometrical moment of inertia of the braces ($I_S$) to the geometrical moment of inertia of the rib ($I_R$) is the same as the ratio of the envisaged screw force ($F_S$) to the expected crank mechanism bearing force ($F_L$).

**7.** Bearing cover according to claim 6, **characterised in that** the dimensions ($B_S$, $H_S$) of the braces (6, 6') and the dimensions ($B_R$, $H_R$) of the rib (7) are given by the ratio

$$K * I_S/I_R = F_S/F_L$$

in which the constant (K) is determined according to the material and to the expected resultant of the crankshaft, and in which the geometrical moment of inertia of the braces is given by

$$I_S = B_S * H_S^3 / 12$$

and the geometrical moment of inertia of the rib is given by $I_R = B_R * H_R^3 / 12$
wherein

$B_S$ = width of the brace (6, 6')
$H_S$ = height of the brace (6, 6')
$B_R$ = width of the rib (7)
and $H_R$ = height of the rib (7).

**8.** Bearing cover according to claim 7, **characterised in that** the web cross-section is chosen in such a way that the bearing shell (2) is as thin as possible
and the rib (7) conversely is tall.

**9.** Bearing cover according to claim 7 or 8, **characterised in that** the rib (7) is less than half as wide as the bearing shell (2) and runs in the centre thereof.

**10.** Bearing cover according to any one of claims 1 to 9, **characterised in that** it is made from homogeneous material.

**11.** Bearing cover according to claim 10, **characterised in that** it is made of cast iron with spheroidal graphite.

**Revendications**

**1.** Chapeau de palier (1) pour un palier de vilebrequin d'un moteur à combustion interne doté d'une coquille de coussinet (2), de deux colonnes de vis (3, 3') disposées à côté de la coquille de coussinet (2) servant à la fixation à un support de palier, ainsi que d'un renfort (4) de la coquille de coussinet (2) s'étendant entre les deux colonnes de vis (3, 3'),
**caractérisé en ce**
**que** le renfort (4) se compose de deux étais (6, 6') présentant une section essentiellement constante sur leur longueur, s'étendant de manière oblique de la zone des extrémités supérieures (5, 5') des colonnes de vis (3, 3') vers la coquille de coussinet (2), ainsi que d'une nervure (7) qui s'étend au niveau de la face supérieure de la coquille de coussinet (2) d'un étai (6) à l'autré (6').

**2.** Chapeau de palier selon la revendication 1, **caractérisé en ce**
**que** les étais (5, 5') s'étendent dans le sens de la résultante de vilebrequin attendue.

**3.** Chapeau de palier selon la revendication 1 ou 2, **caractérisé en ce**
**que** des perçages (11, 11') triangulaires sont formés entre les colonnes de vis (3, 3'), les étais (6, 6') ainsi que la coquille de coussinet (2).

**4.** Chapeau de palier selon la revendication 1, 2 ou 3, **caractérisé en ce**
**que** la section de l'étai est dimensionnée en fonction du matériau et de la résultante de vilebrequin attendue.

**5.** Chapeau de vilebrequin selon la revendication 4, **caractérisé en ce**
**que** la largeur d'étai correspond environ à la largeur de la coquille de coussinet (B).

**6.** Chapeau de palier selon l'une quelconque des revendications 1 à 5,
**caractérisé en ce**
**que** le rapport du moment d'inertie superficiel des étais ($I_S$) au moment d'inertie superficiel de la nervure ($I_R$) correspond au rapport de la force de serrage ($F_S$) prévue à la force d'appui de la commande à manivelle ($F_L$) attendue.

**7.** Chapeau de palier selon la revendication 6, **caractérisé en ce**
**que** le dimensionnement ($B_S$, $H_S$) des étais (6, 6') et le dimensionnement ($B_R$, $H_R$) de la nervure (7) résultent du rapport

$$K * \frac{I_S}{I_R} = \frac{F_S}{F_L}$$

la constante (K) étant définie en fonction du matériau et de la résultante de vilebrequin attendue et le moment d'inertie superficiel d'étai étant donné par

$$I_S = \frac{B_S * H_S^3}{12},$$

et le moment d'inertie superficiel de la nervure par

$$I_R = \frac{B_R * H_R^3}{12}$$

avec

$B_S$ = largeur d'étai (6, 6')
$H_S$ = hauteur d'étai (6, 6')
$B_R$ = largeur de la nervure (7)
et $H_R$ = hauteur de la nervure (7)

8. Chapeau de palier selon la revendication 7, **caractérisé en ce que** la section de traverse est choisie de telle sorte que la coquille de coussinet (2) est réalisée de manière aussi fine que possible et **que** la nervure (7) est réalisée de façon plutôt haute.

9. Chapeau de palier selon la revendication 7 ou 8, **caractérisé en ce que** la largeur de la nervure (7) est inférieure à la moitié de la largeur de la coquille de coussinet (2) et passe dans son milieu.

10. Chapeau de palier selon l'une quelconque des revendications 1 à 9, **caractérisé en ce qu'**il est fabriqué à partir d'un matériau homogène.

11. Chapeau de palier selon la revendication 10, **caractérisé en ce qu'**il se compose de fonte à graphite sphéroïdal.

Fig.1

Fig.2

Fig.3

Fig.4

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3426208 C1